Europäisches Patentamt

European Patent Office

Office européen des brevets

(11) Publication number: **0 512 413 A2**

## EUROPEAN PATENT APPLICATION

(21) Application number: **92107388.8**

(22) Date of filing: **30.04.92**

(51) Int. Cl.⁵: **G06K  17/00**

(30) Priority: **08.05.91 US 697068**

(43) Date of publication of application:
**11.11.92 Bulletin  92/46**

(84) Designated Contracting States:
**AT BE CH DE DK ES FR GB IT LI LU MC NL PT SE**

(71) Applicant: **R. R. DONNELLEY & SONS COMPANY**
**750 Warrenville Road**
**Lisle, Illinois 60532(US)**

(72) Inventor: **Savin, Robert H.**
**375 Woodland Road**
**Highland Park, Illinois 60035(US)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20**
**W-8000 München 86(DE)**

(54) **Method of identifying users of coupons.**

(57) A method of identifying users of coupons includes marking a set of stamps with a code that identifies a particular user. The stamps are then distributed to the user identified by the code, and the user is instructed to secure a stamp on each coupon the user redeems when making purchases. The code is then read and entered into a database along with the identity of the item purchased.

**FIG.1**

SHEET OF
STAMPS

The present invention relates to a new and improved method for identifying users of coupons and other documents, and more particularly, to a new and improved method for tracking users of coupons and other documents through the use of coded stamps.

Manufacturers and retailers plan what to produce and sell based on purchasing habits. This planning requires considerable data to allow an understanding of purchasing habits. Ideally, these data track the identity of an individual and the specific purchases that individual made. The data allow the establishment and maintenance of a database of purchasers by brand and by product. It is also desirable to develop a database of all of the products purchased by the individual.

One procedure for tracking purchases by an individual is typically found in the magazine industry when a subscriber resubscribes to a magazine. This is most often accomplished by a post card being included with the last magazine in an expiring subscription. If the subscriber wishes to renew his or her subscription, a mailing label is removed from the magazine and attached to the post card. In this way the post card is directly associated with a specific subscriber.

Another procedure for tracking items such as coupons, is disclosed in United States Patent No. 4,791,281. In this patent a system for processing coupons, including assembling multiple coded coupons bearing a uniquely identifiable and traceable code are collected in booklets or envelopes and are mailed to a specific individual identified on the coded coupon. The data regarding the individual receiving the coupon is entered into a database. Upon redemption of the coupons, the coupons are decoded and compared to the database to validate the coupon or cancel it. The data may be stored for demographic or geographic analysis.

A direct mail item with a reply envelope and detachable reply coupon is disclosed in United States Patent No. 4,543,082. This patent discloses direct mail articles including an outer envelope with a preformed reply envelope and detachable reply coupons or cards. The reply envelope is provided with a number of apertured pockets adapted to receive one of the reply devices. The contents of the apertured pockets can be viewed upon receipt allowing sorting of the envelopes according to the type of reply included in the pocket.

Another method of collecting response data from direct mail advertising is disclosed in United States Patent No. 4,752,675. This patent discloses a method for determining the effectiveness of a mass advertising program. In this program advertising material sent to a particular addressee is encoded with a unique identifying bar code symbol that identifies the individual receiving the material.

The material includes an invitation to each addressee to return a portion of the material containing the bar code to the sender. The returned material is read and the information is entered into a master file list or database. This information is analyzed to determine the effectiveness of the advertising.

These methods described above all require that the material sent to the consumer or user include a response item. The mailing material and the response coupon or card are typically included in the same mailing requiring the user to return a portion of the original mailed material or to attach a portion of the original mailed material to another portion and return that to the sender. As a result, the data provided is of limited value since it cannot record the unrestricted choices of a consumer in his or her purchases.

Briefly, the present invention is directed to a new and improved method for tracking items such as coupons, and specifically, to tracking the purchases made by a user of coupons. The method includes producing a set of identifiers such as stamps, and marking each stamp with a specific identifying code that corresponds to the recipient of the stamps. The marked or coded stamps are then given to the specific user with instructions for that user to secure at least one of the stamps on coupons used by that user. The coupons can come from any source, not necessarily the same source as the stamps. The user then secures stamps to coupons used in purchases, and in the redeeming process, the code on the stamps is read and entered into a database. The database can then be used to determine the types and frequency of purchases made by the user. In addition, it is possible if desired, to record all the goods purchased by the user at the same time the coupon is used. Those goods purchased without a coupon can be recorded in the database as goods purchased by the user adding additional useful data to the database.

This method provides the ability to track coupons to specific individuals, to reduce the potential for fraud associated with the redemption of the coupon, to establish and maintain a database of coupon purchases by brand and product, to develop a database of other products purchased at the same time the coupons are redeemed, the ability to target future mailings by profiling coupon respondents, and the capability of eliminating deliveries of coupons to non-responsive participants.

The above and other objects, and advantages, and novel features of the present invention will become apparent from the following detailed description of a preferred embodiment of the invention illustrated in the accompanying drawings wherein:

Fig. 1 is an elevation view of a sheet of encoded stamps assembled in accordance with the principles of the present invention;

Fig. 2 is an elevation view of a sheet of stamps bearing a code that has not been associated with a particular user;

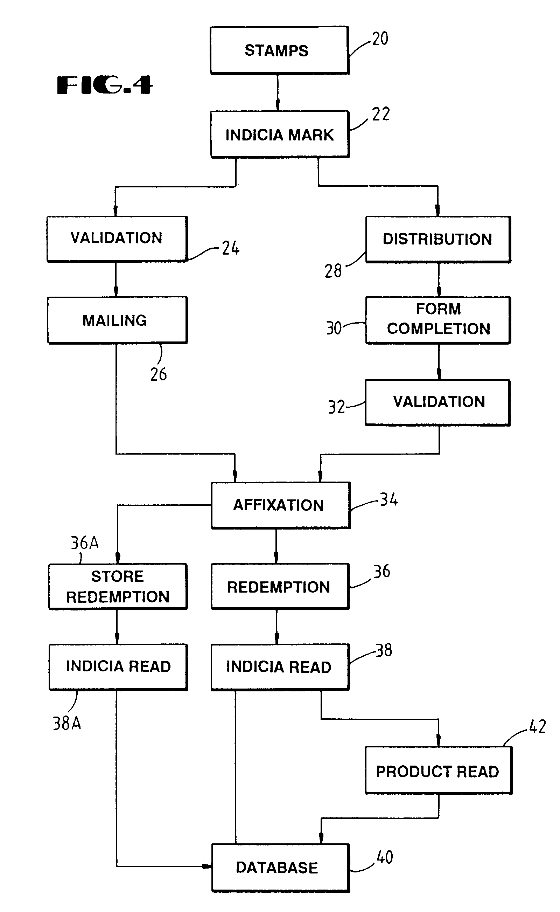

Fig. 3 is an elevation view of a coupon illustrating the attachment of a coded stamp; and

Fig. 4 is a flow chart illustrating the method of the present invention.

While the invention is susceptible to various modifications and alternative forms, specific embodiments thereof have been shown by way of example in the drawings and will be described in detail. It should be understood, however, that it is not intended to limit the invention to the particular forms disclosed, but on the contrary, the intention is to cover all modifications, equivalents, and alternatives falling within the spirit and scope of the invention as defined by the appended claims.

The present invention relates to a method for tracking the identity of individuals redeeming coupons. The source of the coupons is not a limiting factor in the implementation of the method of the present invention.

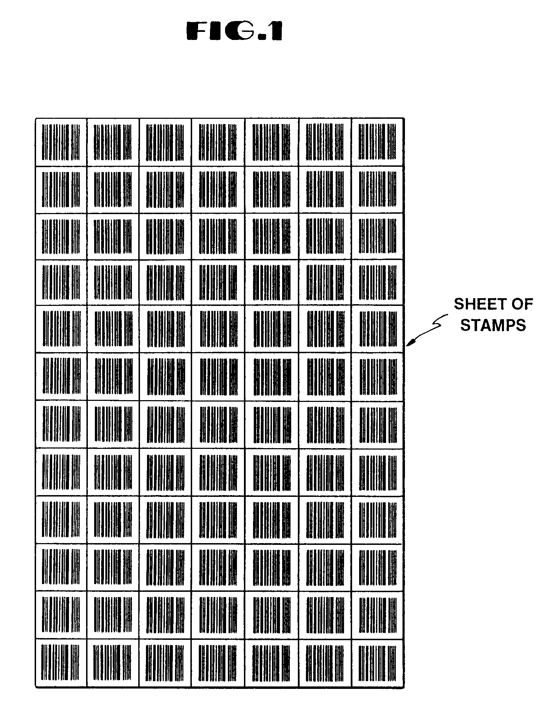

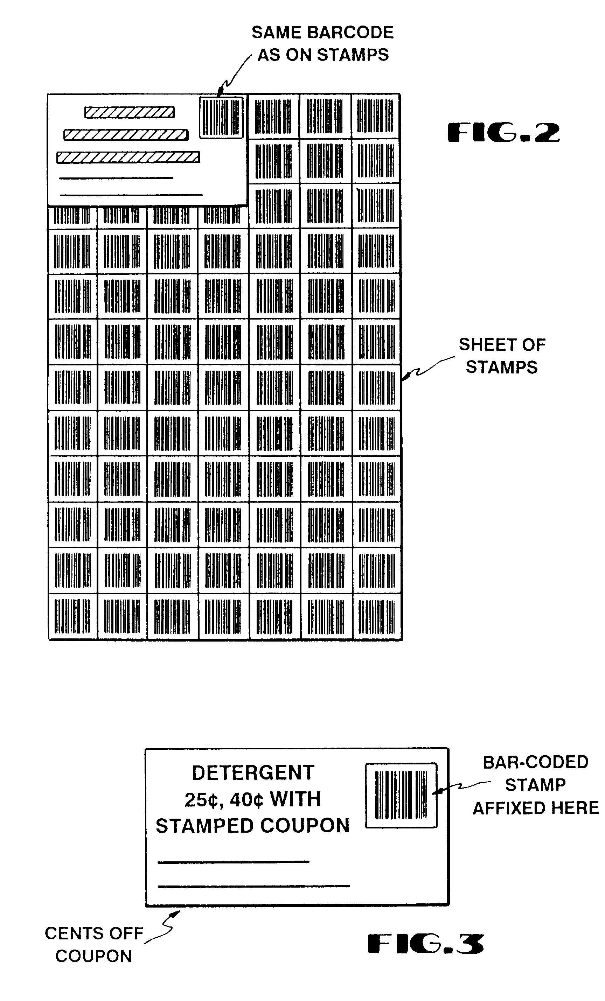

The present invention is directed to the use of stamps 10. The stamps 10 are distributed in sheets 12 to users. Examples of sheets of stamps 12 and 12A are illustrated in Figs. 1 and 2. Each stamp 10 in a sheet 12 or 12A includes indicia 14 that may be a bar code, an alpha numerical designation, or other indicia that can be printed or otherwise applied to each stamp 10. The stamps 10 may be produced with any printing technology that allows sequential bar code or other indicia production. The indicia 14 is the same on every stamp 10 in each sheet 12 or 12A.

The stamps 10, if preferred, can bear an expiration date such that the stamps 10 cannot be used after the expiration date. This date can be incorporated in the indicia 14 on the stamp such that the stamps 10 will not validate a coupon after an established date. Upon expiration of the stamps 10, new stamps can be sent to the individual or household depending on a variety of factors, such as the extent of use of the stamps 10 by the household or individual.

The stamps 10 can be distributed in several different ways. For example, a sheet 12 of stamps 10 each bearing the same indicia 14 that is matched to a specific individual or family on a mailing list is delivered to the specific individual or family. The stamps 10 include an adhesive backing, such as a peel-off or moistenable glue. The sheets 12 of stamps 10 are delivered to each individual or household identified by the indicia 14, either alone or with coupons or other material in a mailing.

The stamps 10 are used to reduce the price of a product purchased with a coupon 16 bearing a stamp 10. If desired, additional incentives can be provided with the use of the stamps 10. For example, payment could be made for use of the stamps 10. Another incentive is a bonus for the use of all the stamps 10.

To use the stamps 10, the individual or household applies a single stamp 10 to any coupon 16 specifically printed to be validated by a stamp 10. The individual or member of the household then purchases the product identified on the coupon 16 and receives a reduction in the cost of the product in accordance with the terms on the coupon.

The number of coupons 16 redeemed with a stamp 10 affixed to them can be counted to maintain an accurate count of the number of stamps used. This reduces the likelihood of fraud.

The second sheet of stamps 12A differs from the first sheet 12 by the inclusion of an information panel 18. The second sheet of stamps 12A is provided to stores which issue the sheet of stamps 12A to shoppers who do not have stamps 10 with them.

The information panel 18 includes indicia 14A corresponding to the indicia 14 printed on the stamps 10 in the sheet 12A. An individual shopper provides his or her identify, such as name and address, in the panel 18. The panel 18 is removed by the store and the shopper's information and the indicia 14A are entered into a database. The shopper may then apply the stamps 10 on coupons 16 and redeem them at the cash register. The information regarding the stamps 10 and who used them can then be tracked once the information from panel 18 is entered into the database. Also, withholding all or partial payment based on the use of stamps until the information panel 18 had been entered into the database would reduce fraud.

A coupon 16 with a stamp 10 affixed to it can be redeemed in one of several ways. The simplest method of redemption is using current system centers that handle coupons and keep track of the numbers to bill the promoters. In these centers scanners can be used to read the indicia 14 on the stamps 10 affixed to the coupons 16. At the same time a bar code or other code 17 on the coupon 16 identifying the product associated with the coupon 16 can be read. The scanners permit the coupons 16 to be matched to the original database used in the mailing of the stamps 10. In addition, store information could be collected in the database since the coupons would be read in batches from each store. This information provides a demographic file useful in determining demographic trends.

Redemption can also be done at the point of purchase with either existing scanners or scanners that are supplied to the stores utilizing an online system. Each store has access to information on redeemers with excessive redemptions and can, for example, confiscate the coupons or notify other parties to reduce fraud.

If an expiration date of the stamps 10 is used, new stamps are distributed to selected individuals on a mailing list based on past stamp usage, fraudulent usage studies, marketing plans or any other method that is compatible with the data collection and analysis procedures. Preferably, each new mailing would include stamps with a design different from earlier stamps, such as a different background color, but the new stamps need not have the same unique indicia 14 as in the previous mailing. Instead, the database could keep track of all indicia 14 associated with each household.

There are also other forms of distribution of the stamps 10 and coupons 16. For example, freestanding inserts can be utilized in addition to or as replacement for mailings. Using this method of distribution, a sheet 12A of stamps 10 is provided as a freestanding insert in a magazine, catalog or similar item. The recipient validates the sheet 12A by bringing the sheet 12A to a store for validation. In this situation, the recipient would not receive the value of a stamped coupons until the redemption center had entered the label 18 into a database. Once that is completed, the recipient receives a check or money for all coupons redeemed.

The method of the present invention can now be described with reference to Fig. 4 which illustrates the steps of the inventive method. Beginning with the first step 20, a sheet of stamps 12 or 12A is produced. Once produced, each stamp 10 in each sheet 12 or 12A is marked in step 22 with a specific identifying indicia, such as a bar code 14. Once each stamp 10 has been coded, the sheets 12 or 12A can be distributed in one of two ways. The first way is to validate the sheets 12 in step 24 by associating the specific indicia 14 with a household or individual. Once this is accomplished, the validated sheets 12 are sent to the user in step 26.

An alternative way of distributing the sheets 12A is to send a sheet of stamps 12A in step 28 to a store or to an individual through the use of freestanding inserts or similar means of distribution. The user in step 30 completes the information panel 18 and brings the sheet 12A to a store. The store validates the stamps in step 32 by removing the information panel 18. The information on panel 18 is then recorded in a database.

Regardless of how the stamps 10 are distributed and validated, the user then affixes or secures individual stamps 10 to coupons 16 in step 34. Once the stamps 10 have been secured to the selected coupons 16, in step 36 the coupons 16 can be redeemed upon purchasing goods associated with those coupons 16. The redemption centers read the indicia 14 on the stamps 10 in step 38, and this data is stored in a database in step 40. Or, in the alternative, after the stamps 10 are secured to the coupons 16 in step 34, the coupons 16 are redeemed at a store in step 36A, but instead of receiving cash or a price reduction, the user is given a credit. The redeemed coupon is then read and validated in step 38A and the data is stored in a database in step 40. Upon the passage of a period of time such as a month, or upon the accumulation of a predetermined amount of credit, a check is issued to the user for the accumulated value of the redeemed coupons 16. In another alternative, in step 42 the redemption center can also read identifying codes on all of the products purchased by the user at the same time the coupons 16 are used. The data read from the additional goods are then placed in the database in step 40. Once this information has been stored in the database, a variety of analyses can be performed.

The method of the present invention, as illustrated in Fig. 4 provides several benefits including the ability to track coupons to specific households or individuals, the reduction of fraud associated with the redemption of coupons, the establishment and maintenance of a database of coupon purchases by brand and by product, the potential for developing a database of other products purchased at the same time as the coupons are redeemed, and the capability of eliminating deliveries of coupons to non-responsive recipients are also possible.

## Claims

1. A method of tracking purchasers of articles who use an item, such as a coupon, in a purchase, comprising the steps of:

   producing a set of identifiers;

   marking each identifier in said set with a specific identifying indicia;

   providing said marked set of identifiers to a user associated with said specific identifying indicia;

   instructing said user to secure at least one of said identifiers to an item such as a coupon and to obtain a first article using said item; and

   reading said identifying indicia.

2. The method of tracking claimed in claim 1 wherein said identifying indicia on each said identifier identifies said user.

3. The method of tracking claimed in claim 1 wherein said item identifies said first article.

4. The method of tracking claimed in claim 1 further comprising the step of recording said identifying indicia in a database.

5. The method of tracking claimed in claim 1 wherein said identifying indicia comprises bar code.

6. The method of tracking claimed in claim 1 further comprising the step of reading into a database other articles purchased at the same time as said first article.

7. The method of tracking claimed in claim 1 further comprising the step of establishing an expiration date for said identifiers.

8. The method of tracking claimed in claim 1 further comprising the step of validating each said set of identifiers.

9. A method of identifying users of coupons, comprising the steps of:

preparing a set of stamps;

marking each stamp in said set of stamps with the same identifier, said identifier corresponding to a specific user;

providing said specific user with said set of marked stamps;

instructing said specific user to secure one of said marked stamps to any coupon obtained by said user and to redeem said coupon with said stamp secured thereto; and

reading said identifier into a database.

10. The method of identifying users of coupons set forth in claim 9 further comprising the step of recording the identity of goods purchased with each coupon with a marked stamp and the identity of other goods purchased at the same time by said specific user.

11. The method of identifying users of coupons set forth in claim 9 wherein said step of marking each stamp in said set of stamps comprises marking each stamp with a bar code.

12. The method of identifying users of coupons set forth in claim 9 wherein said step of marking each stamp in said set of stamps comprises marking each stamp with an alpha-numeric code.

13. The method of identifying users of coupons set forth in claim 9 further comprising the steps of establishing a date of expiration of said set of marked stamps, and preparing a second set of stamps to be marked and provided to said specific user after the expiration of said set of marked stamps.

14. The method of identifying users of coupons set forth in claim 9 further comprising the step of validating said marked set of stamps before use by said specific user.

# FIG.1

SHEET OF
STAMPS

SAME BARCODE
AS ON STAMPS

**FIG.2**

SHEET OF
STAMPS

DETERGENT
25¢, 40¢ WITH
STAMPED COUPON

BAR-CODED
STAMP
AFFIXED HERE

CENTS OFF
COUPON

**FIG.3**

FIG.4